# EUROPEAN PATENT SPECIFICATION

(11) **EP 0 567 254 B1**
(45) Date of publication and mention of the grant of the patent: **24.01.1996**
(21) Application number: 93302768.2
(22) Date of filing: 08.04.1993
(51) Int. Cl.: F16B 13/06

(54) **Concrete anchor**
Betonanker
Cheville pour béton

(30) Priority: 22.04.1992 JP 130201/92
(43) Date of publication of application: 27.10.1993
(73) Proprietor: YUGENKAISHA SHINJO SEISAKUSHO, Nishinari-ku, Osaka (JP)
(72) Inventor: Shinjo, Katsumi, Osaka (JP)
(74) Representative: Purvis, William Michael Cameron

(56) References cited:
- EP-A- 0 104 723
- EP-A- 0 262 444
- EP-A- 0 274 816
- EP-A- 0 314 912
- BE-A- 773 948
- FR-A- 2 218 496

## Description

The invention relates to a concrete anchor.

Such a concrete anchor can be inserted into and fixed in a rough hole formed in a concrete structure such as a concrete block, a concrete wall or the like.

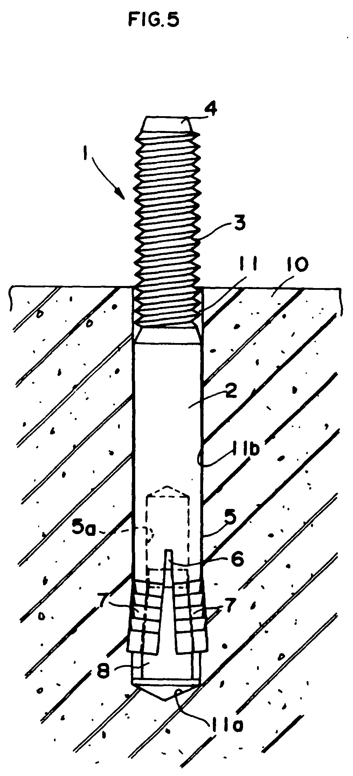

Figure 5 of the accompanying drawings shows a prior art concrete anchor which comprises an anchor body 1 and a tapered plug 8. A male thread 3 and a striking head 4 are formed at one end of a shank 2 which constitutes the anchor body 1. The other end of the shank comprises a cylindrical portion 5 closed at its inner end and open at its outer end. A plurality of slots extend axially from the open end towards the closed end of the cylindrical portion 5 so as to provide a plurality of expandable feet 7. The tapered plug 8 is set in an axial bore 5a formed within the cylindrical portion. In use, a rough hole 11 will be formed in a concrete structure 10, and then the concrete anchor will be inserted into the hole, cylindrical portion 5 first, until the end of the tapered plug 8 reaches the bottom 11a of the hole 11. Subsequently, a hammer or any other suitable tool will be used to strike the head 4 to cause the tapered plug 8 to serve as a wedge to open the expandable feet 7 radially and outwardly. The feet 7 expanded in this way will claw or strongly engage with the inner periphery 11b of the hole 11 so that the anchor is fixed to the concrete structure. The diameter of the shank 2 is generally equal to that of the male thread 3.

The anchor of the described type composed of only two parts, that is the anchor body and the tapered plug, is therefore simple in structure and can be manufactured advantageously at a low cost. Further, since the rough hole 11 in the concrete structure 10 can be made small so as just to allow the shank 2 and male thread 3 to be inserted, it is easy to use the concrete anchor of this type in various construction works.

The expandable feet 7 however cannot be opened to a sufficient extent even if a strong initial impact is applied to the striking head 4 of the anchor body 1. In addition, the feet 7 of the anchor thus struck may violently scratch the concrete hole and produce a considerable amount of concrete chips or scrapings. Such scrapings will collect on the bottom 11a of the hole and hinder the anchor body 1 from taking its deep position, thus failing strongly to fix it to the concrete structure. This will be a more serious problem in a case wherein a vibrational or varying load is applied to the anchor, because such a load or stress is likely to produce large or small cracks around the rough hole 11, thus impairing the retaining force of the material in which the concrete anchor has been inserted.

Patent Specification FR-A-2 218 496 discloses a concrete anchor which can be used as a cutting bit to form a hole and has an escape channel for cuttings, after the hole is formed an expansion member can be engaged in the inner end of the anchor to cause expansion thereof when the anchor is struck.

Patent Specification BE-773 948 shows a concrete anchor to be driven onto a tapered plug, the tapered plug having a recessed portion to receive scrapings caused as the anchor is driven onto the plug.

According to the invention there is provided a concrete anchor comprising:
an anchor body having attachment means and a striking head formed at one of the opposite ends of a rod-shaped member;
a hollow cylindrical portion formed at the other end of the rod-shaped member so as to define an axial bore having an open end and a closed end;
slots each extending axially from the open end towards the closed end of the hollow cylindrical portion;
expandable feet each defined between two adjacent ones of the slots of the hollow cylindrical portion and each having a saw-toothed scratching tip formed at its free end; and
a tapered plug having a tapered portion inserted in the axial bore of the hollow cylindrical portion of the anchor body, and having an annular recess with a retaining shoulder formed between a large diameter portion and a root of the tapered plug, the annular recess providing a cavity to receive concrete scrapings and the retaining shoulder being a circular edge of the tapered portion;
wherein the tapered plug is so shaped that the expandable feet are spread radially and outwardly of the hollow cylindrical portion, simultaneously with the inward advance of the anchor body towards a bottom of a rough hole previously bored in a concrete structure, when
the anchor, which has been inserted in the rough hole, is struck at its head, and that as the expandable feet are spread the scratching tips scrape an inner periphery of the hole, thereby to form undercuts allowing the expandable feet to be easily spread, and wherein upon spreading of the feet end portions of the feet are urged radially inwardly due to their strong elasticity and the shoulder is caused to bite into the inner surface of those end portions of the feet.

In such a concrete anchor a moderate initial impact on the anchor can produce and maintain a strong detaining force between a rough hole and the concrete anchor, in spite of possible cracks which may take place around the hole after the anchor has been set therein.

In operation, an initial impact will be given to a striking head of the anchor after insertion in the rough hole. The tapered plug will act like a wedge to expand radially and outwardly the expandable feet of the anchor body, while the body is simultaneously displaced in its entirety towards the bottom of the rough hole. During this movement, the saw-toothed tip ends of the feet will scrape the inner periphery of the rough hole, thereby producing "undercuts" which render easier full spreading of the expandable feet. As the feet are spread fully and completely, the tapered plug will have its largest-diameter portion retracted inside the saw-toothed scratching tips. In this state, the retaining shoulder is in a fixed engagement with the inner surfaces of the expandable feet which tend resiliently and radially upwardly to return to their unspread position. Once set in the anchor body, the tapered plug can be separated therefrom no longer. However, the crushed concrete chip produced by the scratching tips when the anchor body is struck into place will be collected in the annular recess between the end of the tapered region and the root of the plug. The anchor body should thus encounter no obstacle until it reaches its deepest position.

The invention is diagrammatically illustrated by way of example in the accompanying drawings, in which:
Figure 1 is a front elevation of a concrete anchor, before use, according to a first embodiment of the invention;
Figure 2 is a front elevation showing the concrete anchor of Figure 1 in use;
Figure 3 is an enlarged cross-section showing in part the anchor of Figure 2;
Figure 4 is a cross-section corresponding to Figure 3, but showing a second embodiment of a concrete anchor according to the invention; and
Figure 5 is a front elevation of a concrete anchor of a previously proposed kind in use.
.

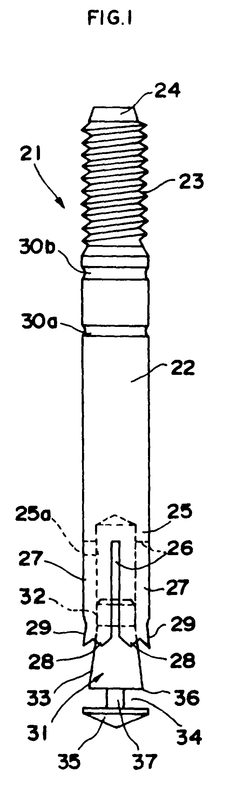

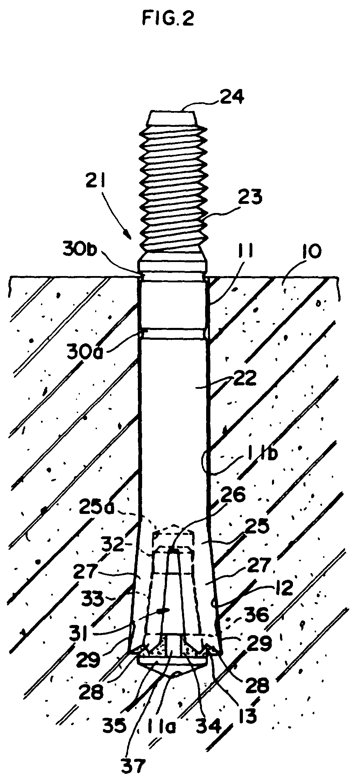

Figures 1 and 2 show a concrete anchor of a first embodiment, before use and in use, respectively. The concrete anchor comprises an anchor body 21, formed as a rod-shaped member 22 and having at one of its ends a male thread 23 and a striking head 24. At the other end of the body 21, a hollow cylindrical portion 25 is formed to have an open end and a closed end. Four slots 26 extend axially of the hollow cylindrical portion 25 from its open end towards the closed end so that four expandable feet 27 are defined each between two adjacent ones of the slots 26. The rod-shaped member 22 has a diameter generally equal to the outer diameter of the male thread 23. Each expandable foot 27 has, at its extremity, saw-toothed scratching tips 28 whose outer surfaces are slanted inwardly to provide a relief 29. Annular grooves 30a and 30b are formed near the male thread 23 of the body 21. The groove 30a serves as an indicator to show the inserted depth of the body 21 in a rough hole 11 of a concrete structure. The groove 30b serves as another indicator to show that the feet 27 are in their fully spread state caused by striking of the anchor body 21

The anchor further comprises a tapered plug 31, which has a short columnar portion 32, a tapered portion 33 extending therefrom and a flange-shaped root 35 connected to the tapered portion 33 by a thin and short shaft 37. The columnar portion 31 of this plug is closely fitted in an axial bore 25a of the anchor body's hollow cylindrical portion 25. The tapered portion 33 of the plug 31 increases in diameter toward the root 35. The root 35 rests on and is supported by a bottom 11a of the rough hole 11. An annular recess 34 to receive crushed concrete chips is formed as a cavity or clearance around the short shaft 37 and between and end surface of the tapered portion 33 and an upper surface of the flange-shaped root 35. The end surface of the tapered portion 33 is surrounded by a circular edge which has the largest diameter of the tapered portion 33, this circular edge serving as a retaining shoulder 36 as detailed below.

The saw-toothed scratching tips 28 of the anchor body and the tapered plug 31 are hardened by quenching them before use. Figure 2 shows how the concrete anchor thus constructed in use.

The anchor led by its tapered plug 31 will be inserted into the rough hole 11 previously bored in a concrete structure 10. The depth of the hole is adjusted so that the lower annular groove 30a is flush with the outer surface of the concrete structure 10, with the flange-shaped root 35 of the plug abutting the bottom 11a of the hole. The anchor body is then struck downward at its head 24 by a hammer or like tool so that the tapered portion 33 of the plug acts as a wedge and spreads the expandable feet 27 radially outwardly as the hollow cylindrical portion 25 slides along the tapered portion 33 and toward the hole bottom 11a. During such a motion of the feet 27, the scratching tip ends 28 will scrape an inner periphery 11b of the hole, thereby to form "undercuts" which as a whole contribute towards forming a tapered recess 12 having its diameter increasing towards the bottom. Consequently, the expandable feet 27 are spread smoothly and come into a strong gripping engagement with the walls of the tapered recess 12. In this state, the upper annular groove 30b lies flush with the outer surface of the concrete structure 10, as shown in Figure 2. Thus, such a position of the groove 30b indicates that the spreading of the feet is finished (that is, the insertion of the struck anchor body is completed). The anchor body 21 is rigidly fixed in this manner to the concrete structure 10. The reliefs 29 above the scratching tips 28 are effective to reduce the resistance of the concrete rough hole to the insertion of the anchor body.

Since the scratching tips 28 assist the expandable feet 27 to be spread, the angle of the tapered portion 33 of the plug 31 can be increased to twice or more that of the angle of prior art plugs, for example to be about 10° or greater with respect to its axis. In detail, the diameter of the short columnar portion 32 can be reduced to a remarkable extent to increase the expanded angle of the feet. The inner diameter of the axial bore 25a will be made smaller, with the thickness of the feet 27 being increased correspondingly so as further to improve the retained strength of this anchor. It is also notable that the height of the plug 31 and the length of the slots 26 can be decreased as compared with the prior art.

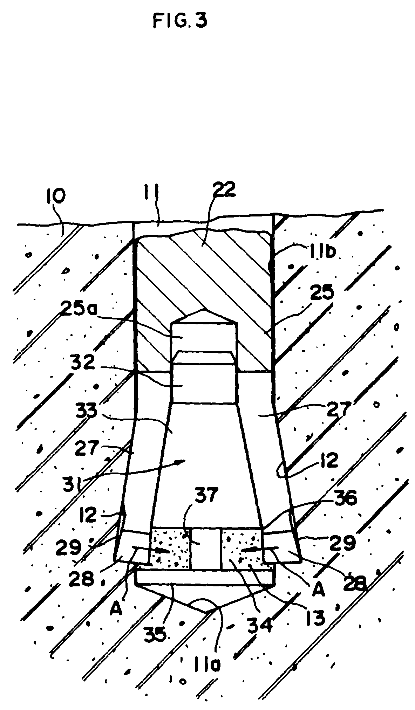

The concrete chips which will have been crushed by the scratching tips 28 are directed into the annular recess or cavity 34, so that the inward advance of the anchor body 21 will not be hindered by the concrete chips. The expandable feet 27 are thus allowed to spread smoothly and fully, following the forced inward advance of the anchor body. As shown best in Figure 3, the retaining shoulder 36 defining the largest diameter of the tapered portion 33 of the plug 31 is forcibly positioned beyond the feet extremities, i.e. the tips 28 and is within the axial bore. The arrows "A" in Figure 3 shows that the end portions of the expandable feet 27 are urged centripetally towards the axis of this anchor, due to their strong elasticity. As a result, the shoulder 36 will bite the inner surface of those end portions of the expandable feet 27, to such an extent that the tapered plug 31 will not be able to slip off the anchor body 21. It will now be apparent that despite any possible cracks, which a vibrational or varying load might produce in the wall of the rough hole 11 having the anchor inserted therein, the plug 31 can hold the feet 27 spread.

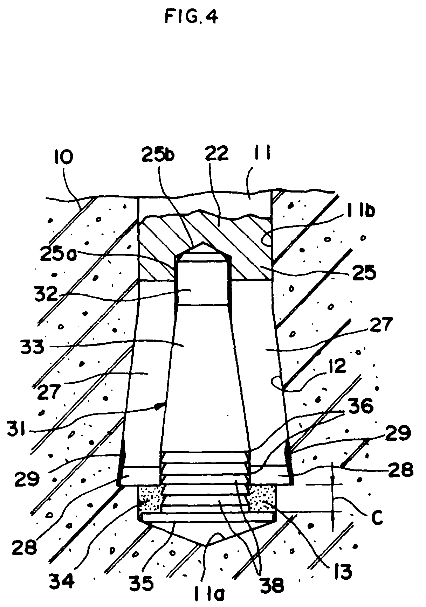

In a second embodiment shown in Figure 4, the tapered plug 31 is modified by replacing the thin shaft 37 by an oblique-stepped longer shaft 38 extending between the tapered portion 33 and the root 35. A plurality of retaining shoulders 36 are thus provided coaxially one after another in this arrangement. Although the rough hole 11 must be bored somewhat deeper in the concrete structure 10, it is not required here to machine an anchor material to form the thin and short shaft and the chip receiving annular recess 34 in the manner of the first embodiment. The juxtaposed shoulders 36 are more effective to prevent the slipping of the tapered plug 31. The annular recess 34 to receive the concrete chips in this case will be formed around the oblique-stepped shaft 38 and above the root 35 of the plug, when used as shown in Figure 4. In order to ensure such a space, it is required that the upper surface of the root 35 be a distance "C" away from the lower end of the scratching tips 28, even when the upper end of the short columnar portion 32 of the plug 31 bears against a bottom 25b of the axial bore 25.

In the embodiments described above, the anchor body 21 has at its outer end the male thread 23 for connection of a mechanical part or the like. However, such male thread may be replaced by a female thread, a hook, a flange or any other conventional connection means.

In summary, a comparatively weak impact applied to the head is enough for the concrete anchor shown herein to be inserted in and fixed to a concrete body with a strong retention force. Further, any cracks caused by the vibration or shock onto the fixed anchor will not loosen it within the hole of the concrete body. It is also advantageous that this anchor is simple in structure so enabling inexpensive and efficient production thereof.

## Claims

A concrete anchor comprising:
an anchor body (21) having attachment means (23) and a striking head (24) formed at one of the opposite ends of a rod-shaped member (22);
a hollow cylindrical portion (25) formed at the other end of the rod-shaped member (22) so as to define an axial bore (25a) having an open end and a closed end;
slots (26) each extending axially from the open end towards the closed end of the hollow cylindrical portion (25);
expandable feet (27) each defined between two adjacent ones of the slots (26) of the hollow cylindrical portion and each having a saw-toothed scratching tip (28) formed at its free end; and
a tapered plug (31) having a tapered portion (33) inserted in the axial bore (25a) of the hollow cylindrical portion (25) of the anchor body (21), and having an annular recess (34) with a retaining shoulder (36) formed between a large diameter portion and a root (35) of the tapered plug (31), the annular recess (34) providing a cavity to receive concrete scrapings and the retaining shoulder (36) being a circular edge of the tapered portion (33);
wherein the tapered plug (31) is so shaped that the expandable feet (27) are spread radially and outwardly of the hollow cylindrical portion, simultaneously with the inward advance of the anchor body (21) towards a bottom (11a) of a rough hole (11) previously bored in a concrete structure (10), when the anchor, which has been inserted in the rough hole (11), is struck at its head (24), and that as the expandable feet are spread the scratching tips (28) scrape an inner periphery (11b) of the hole, thereby to form undercuts allowing the expandable feet (27) to be easily spread, and wherein upon spreading of the feet (27) end portions of the feet (27) are urged radially inwardly due to their strong elasticity and the shoulder (36) is caused to bite into the inner surface of those end portions of the feet (27).

## Patentansprüche

1. Betonanker mit:
einem Ankerkörper (21), der Befestigungseinrichtungen und einen Schlagkopf (24) hat, der an einem der gegenüberliegenden Enden eines stangenförmigen Teils (22) ausgebildet ist,
einem hohlen zylindrischen Abschnitt (25), welcher an dem anderen Ende des stangenförmigen Teils (22) ausgebildet ist, um so eine axiale Bohrung (25a) zu definieren, welche ein offenes und ein geschlossenes Ende hat,
Schlitzen (26), die sich jeweils axial von den offenen Enden in Richtung des geschlossenen Endes des hohlen zylindrischen Abschnittes (25) erstrecken,
einem austreckbaren Fuß (27), welcher jeweils zwischen zwei benachbarten Schlitzen (26) des hohlen zylindrischen Abschnittes gebildet wird und welcher jeweils eine sägezahnförmige Kratzspitze (28) hat, die an seinem freien Ende ausgebildet ist, und
einem verjüngt zulaufenden Stopfen (31), der einen verjüngt zulaufenden Abschnitt (33) aufweist, welcher in die axiale Bohrung (25a) des hohlen zylindrischen Abschnittes (25) des Ankerkörpers (21) eingesetzt ist und welcher eine ringförmige Aussparung (34) mit einer Halteschulter (36) hat, die zwischen einem Abschnitt mit großem Durchmesser und einem Fuß bzw. einer Wurzel (35) des verjüngt zulaufenden Stopfens (31) gebildet wird, wobei die ringförmige Aussparung (34) einen Hohlraum bereitstellt, um abgekratzte Betonstücke aufzunehmen, und wobei die Halteschulter (36) ein ringförmiger Rand des verjüngt zulaufenden Abschnittes (33) ist,
wobei der verjüngt zulaufende Stopfen (31) derart geformt ist, daß die ausstreckbaren Fußteile (27) in radialer Richtung und nach außen bezüglich des hohlen zylindrischen Abschnittes ausgespreizt werden, gleichzeitig mit der Vorbewegung des Ankerkörpers (21) nach innen in Richtung auf einen Boden (11a) eines groben Loches (11), welches zuvor in einem Betonaufbau (10) gebohrt wurde, wobei der Anker, wenn er in das grobe Loch (11) eingesetzt worden ist, auf seinen Kopf (24) geschlagen wird, und wobei dann, wenn die ausstreckbaren Füße ausgespreizt werden, die Kratzspitzen (28) an der inneren Umfangsfläche (11b) des Loches kratzen, um dadurch hinterschnittene Bereiche zu bilden, welche es erlauben, daß die ausstreckbaren Füße (27) leicht gespreizt werden, und wobei beim Spreizen der Füße (27) Endabschnitte der Füße (27) radial nach innen gedrückt werden aufgrund ihrer großen Elastizität, und daß bewirkt wird, daß die Schulter (36) sich in die Innenfläche dieser Endabschnitte der Füße (27) hineinfrißt.

## Revendications

1. Cheville pour béton comprenant :
un corps d'ancrage (21) comportant un moyen de fixation (23) et une tête d'impact (24) formée à l'une des extrémités opposées d'un élément en forme de tige (22);
une portion cylindrique creuse (25) formée à l'autre extrémité de l'élément en forme de tige (22) afin de définir un alésage axial (25a) comportant une extrémité ouverte et une extrémité fermée;
des fentes (26) s'étendant chacune axialement de l'extrémité ouverte vers l'extrémité fermée de la portion cylindrique creuse (25);
des pieds extensibles (27) définis chacun entre deux fentes adjacentes (26) de la portion cylindrique creuse et comportant chacun une pointe de raclage en dents de scie (28) formée à son extrémité libre; et
un bouchon conique (31) comportant une portion conique (33) insérée dans l'alésage axial (25a) de la portion cylindrique creuse (25) du corps d'ancrage (21), et comportant un évidement annulaire (34) avec un épaulement de retenue (36) formé entre une portion de grand diamètre et une base (35) du bouchon conique (31), l'évidement annulaire (34) formant une cavité pour recevoir les fragments de béton et l'épaulement de retenue (36) étant un bord circulaire de la portion conique (33);
dans laquelle le bouchon conique (31) a une forme telle que les pieds extensibles (27) sont déployés radialement et vers l'extérieur de la portion cylindrique creuse (25), simultanément à la progression interne du corps d'ancrage (21) vers un fond (11a) d'un trou grossier (11) auparavant creusé dans une structure en béton (10), lorsque la cheville, qui a été insérée dans le trou grossier (11), est frappée à sa tête (24), et que tandis que les pieds extensibles sont déployés les pointes de raclage (28) raclent une périphérie interne (11b) du trou, ce qui forme des découpes permettant aux pieds extensibles (27) d'être facilement déployés, et dans laquelle lors du déploiement des pieds (27), les portions d'extrémité des pieds (27) sont sollicitées radialement vers l'intérieur en raison de leur grande élasticité et l'épaulement (36) est amené à mordre dans la surface interne desdites portions d'extrémité des pieds (27).
